# EUROPEAN PATENT SPECIFICATION

(11) **EP 0 405 939 B1**
(45) Date of publication and mention of the grant of the patent: **18.08.1999**
(21) Application number: 90307021.7
(22) Date of filing: 27.06.1990
(51) Int. Cl.: G11B 27/28, G11B 27/032, G11B 27/34

(54) **Video signal recording and reproducing apparatus**
Videosignalaufzeichnungs- und Wiedergabegerät
Appareil d'enregistrement et de reproduction de signal vidéo

(30) Priority: 30.06.1989 JP 16858389
(43) Date of publication of application: 02.01.1991
(73) Proprietor: SONY CORPORATION, Tokyo (JP)
(72) Inventor: Tsuchiya, Kazuhisa, C/o Sony Corporation, Shinagawa 6-chome, Tokyo (JP); Mita, Michio, C/o Sony Corporation, Shinagawa 6-chome, Tokyo (JP)
(74) Representative: Ayers, Martyn Lewis Stanley

(56) References cited:
- EP-A- 0 160 102
- EP-A- 0 201 431
- EP-A- 0 257 813
- EP-A- 0 316 304
- EP-A- 0 322 100
- US-A- 4 837 638

## Description

The present invention relates to a video signal recording and reproducing apparatus which can be applied to make a master tape of a video CM (commercial), in particular a video CM which can be automatically transmitted.

A VTR is used for the CM reproduction for television broadcasting. In the view CM, a plurality of CM materials are sequentially recorded on one magnetic tape. Hitherto, relevant information regarding the CM material, such as the content of the CM, its sponsor and the like, is inserted as a telop into a picture plane just before the picture plane which is actually broadcast.

In order to change the information regarding the CM material, hitherto it has been necessary to remake the telop, which is troublesome. Although there is the possibility of forming material information as user's bits of a time code LTC which is recorded on a track lengthwise rewritten, the rewriting of the time code LTC is overlooked and the time code LTC does not coincide with the CM material.

EP-A-0,201,431 discloses a video signal recording apparatus arranged to record a video signal comprising a program and control data on a magnetic tape, the apparatus comprising: tape code generating means for generating tape code data having a user's bit area in which information data identifying the magnetic tape are formed; recording means for recording said tape code data on a longitudinal track of said magnetic tape; stop code generating means for generating stop code data having a user's bit area in which stop control data for detection by reproducing apparatus for use in controlling the transport of said recording medium are formed; and recording means for recording said stop code data on a longitudinal track of said recording medium.

According to a first aspect of the present invention, there is provided a video signal recording apparatus arranged to record a video signal comprising a program and control data on a magnetic tape, the apparatus comprising: tape code generating means for generating tape code data having a user's bit area in which information data identifying the magnetic tape are formed; recording means for recording said tape code data on a longitudinal track (LTC) of said magnetic tape; stop code generating means for generating stop code data having a user's bit area in which stop control data for detection by reproducing apparatus for use in controlling the transport of said recording medium are formed; and recording means for recording said stop code data on a longitudinal track of said recording medium, characterised in that the video signal comprises a plurality of programs, the apparatus further comprises: material code generating means for generating, for each program, material code data having a user's bit area in which information data indicative of the contents of the respective program are formed; inserting means for inserting said material code data of each program into at least one predetermined horizontal period in a vertical blanking interval of the video signal of the respective program; and recording means for recording the output signal of said inserting means on a video track of said recording medium, and said recording means for recording said stop code data is arranged to record said stop control data on the longitudinal track (LTC) at a position corresponding to a cue point of said video signal a predetermined amount before the broadcasting start position of the first of said plurality of programs.

Therefore the present invention can provide a video signal recording apparatus in which, by forming information regarding a CM material as user's bits of a time code VITC which is recorded integratedly with the CM material, information which correctly corresponds to the CM material can be recorded.

According to a second aspect of the present invention, there is provided an information signal reproducing apparatus arranged to reproduce an information signal comprising a plurality of programs composed of video and audio signals recorded on information tracks of a recording medium including a longitudinal track in addition to said information tracks, wherein recorded on said longitudinal track are tape code data having user's bit area in which information data identifying the magnetic tape are formed and stop control data for use in controlling the transport of said recording medium recorded on the longitundial track at a portion corresponding to a cue point a predetermined amount before the broadcasting start position of the first of said plurality of programs, and wherein inserted in the vertical blanking intervals of the video signal of each program are material code data having a user's bit area in which information data indicative of the contents of the respective program are formed, said apparatus comprising: reproducing means for reproducing said video and audio signals, said information data of said tape code data and said material code data, and said stop control data recorded on said longitudinal track, means for displaying said information data reproduced by said reproducing means, and stop control means for controlling the transport of said recording medium in response to said stop control data reproduced by said reproducing means.

In this invention, the material information regarding the CM material is recorded as user's bits of a time code in the vertical blanking period of the video signal of the CM material. Therefore, the CM material and the material information are prevented from becoming separated.

On the other hand, a stop code is recorded as user's bits of the time code in the longitudinal direction of the master tape. The completion of the transmission of the CM material, standby state of the transmission of the CM material, and the like can be easily monitored and controlled.

The invention will be further described by way of non-limitative example with reference to the accompanying drawings, in which:-
Figure 1 is a schematic diagram showing a tape format of a master tape which is used in an embodiment of the present invention;
Figure 2 is a schematic diagram showing recording positions of a user's code and a material code;
Figure 3 is a schematic diagram showing a data format of a user's control code;
Figure 4 is a schematic diagram showing a data format of a material code;
Figure 5 is a schematic diagram showing a recording position of a stop code;
Figure 6 is a schematic diagram showing a recording position of an end frame code and an end code;
Figure 7 is a schematic diagram showing a data format of the stop code;
Figure 8 is a schematic diagram showing a data format of the end code;
Figure 9 is a block diagram showing a construction to make a CM material;
Fig. 10 is a block diagram showing a construction to make a master tape;
Fig. 11 is a block diagram showing a construction to transmit a CM;
Fig. 12 is a schematic diagram showing the outline of the master tape; and
Fig. 13 is a schematic diagram showing a display screen of a monitor television when a CM is transmitted.

An embodiment of the present invention will be described hereinbelow with reference to the drawings.

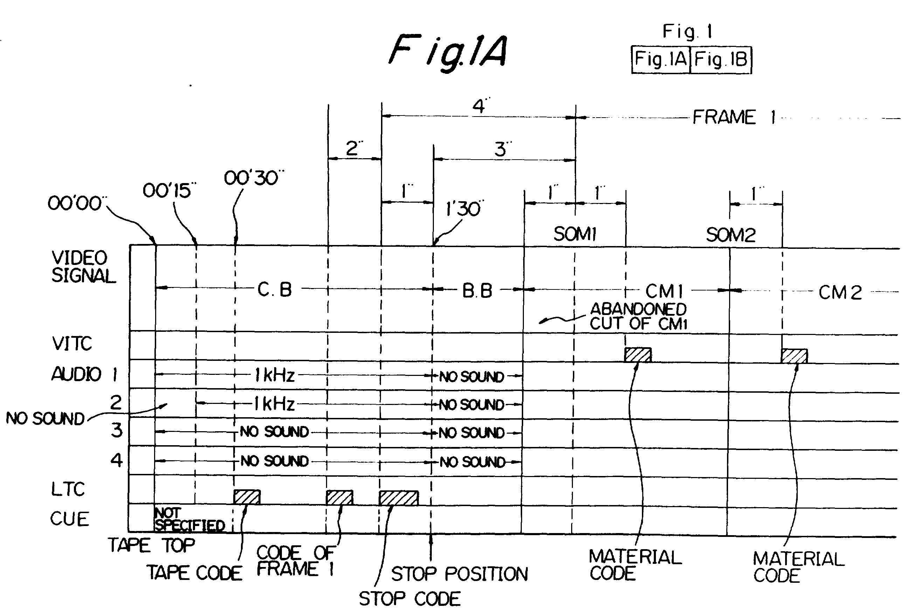

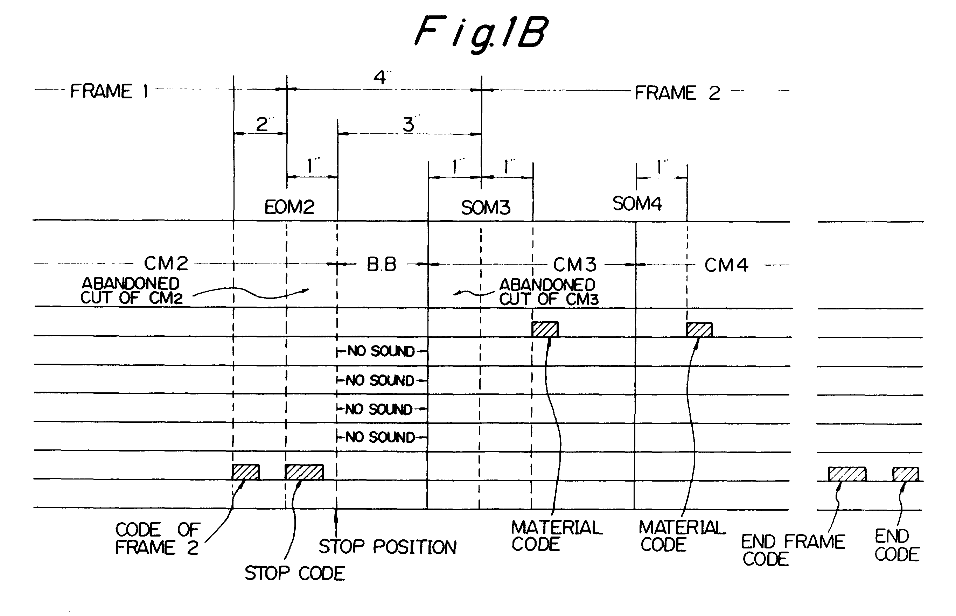

Figs. 1A and 1B show a tape format in one magnetic tape (referred to as a master tape) in which a plurality of CM materials are recorded in a lump. A continuous format is divided and shown in Figs. 1A and 1B.

The tape format comprises: a video signal area; a VITC area to record a material code, which will be explained hereinlater; audio signal areas of channels 1 to 4; an LTC (time code in the longitudinal direction) area to record a tape code, a stop code, and the like; and a cue area. The video signal area is formed as an oblique track. A VITC is repetitively recorded in two predetermined horizontal intervals in a vertical blanking period. The video signal area, audio signal areas, LTC area, and cue area are formed as tracks in the longitudinal direction of the tape.

The tape format is constructed in a manner such that a header area is formed on the tape top side and areas of commercial frames (hereinafter, abbreviated to CM frames), for instance, are sequentially formed from the tape top side to the tape end side.

The following signals are recorded in the header.
Video signal area --- A color bar signal (C, B) to check a signal line and a subsequent black burst signal (B, B) are recorded. A boundary point between the color bar signal (C, B) and the black burst signal (B, B) is set to a stop position (STOP).
VITC area --- non-recorded
Audio signal areas:
Channel 1 --- A signal to test of 1 kHz is recorded in the area corresponding to the color bar signal (C, B). No sound is recorded in the area corresponding to the black burst signal (B, B).
Channel 2 --- No sound and a signal of 1 kHz are recorded in the area corresponding to the color bar signal (C, B) and no sound is recorded in the area corresponding to the black burst signal (B, B).
Channel 3 --- No sound
Channel 4 --- No sound
LTC area --- An LTC (for instance, SMPTE time code) which is a time code in the longitudinal direction is continuously recorded. A tape code, a code of the frame 1, and a stop code are recorded as a user's bit into the area corresponding to the color bar signal (C, B) at timings as shown in Fig. 1.
Cue area --- Not particularly specified.

As shown in Figs. 1A and 1B, each CM frame which is recorded and formed after the header is arranged at an interval of four seconds. An abandoned cut area of one second is set to each of the tape top side and the tape end side of each CM frame. On the other hand, time addresses in the LTC area are continuous.

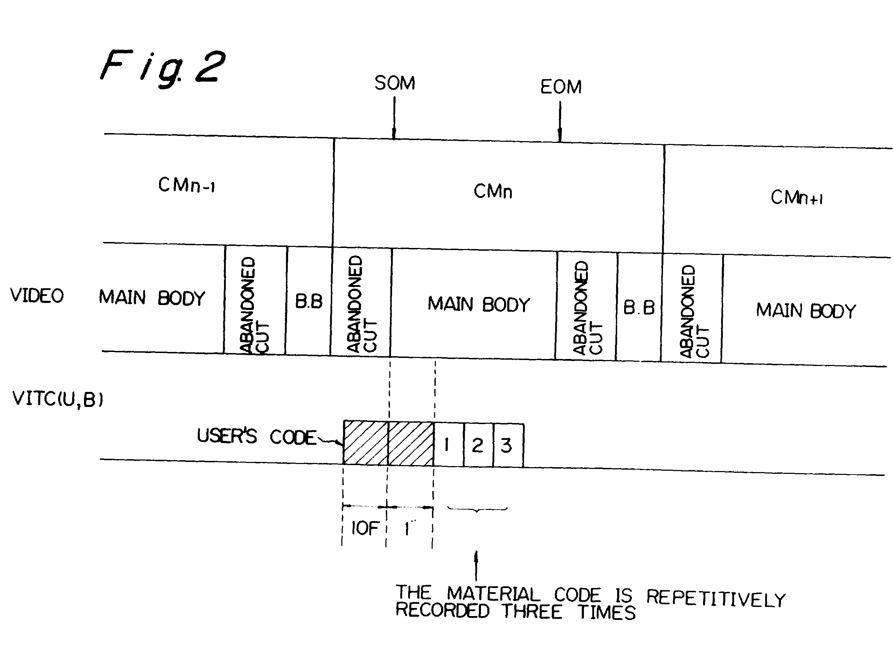

As shown in Figs. 1A and 1B, the area of each CM frame is formed by a plurality of CM materials. Each of the CM materials has a tape format of Fig. 2.

Video signal area --- An abandoned cut area which is not broadcasted, a main body of the CM, and an abandoned cut area are sequentially recorded on the tape top side. A black burst signal is recorded on the tape end side. A boundary between the abandoned cut area and the main body on the tape top side is set to an on-air start point (SOM). On the other hand, a boundary between the main body and the abandoned cut area in the rear portion is set to an on-air end point (EOM).

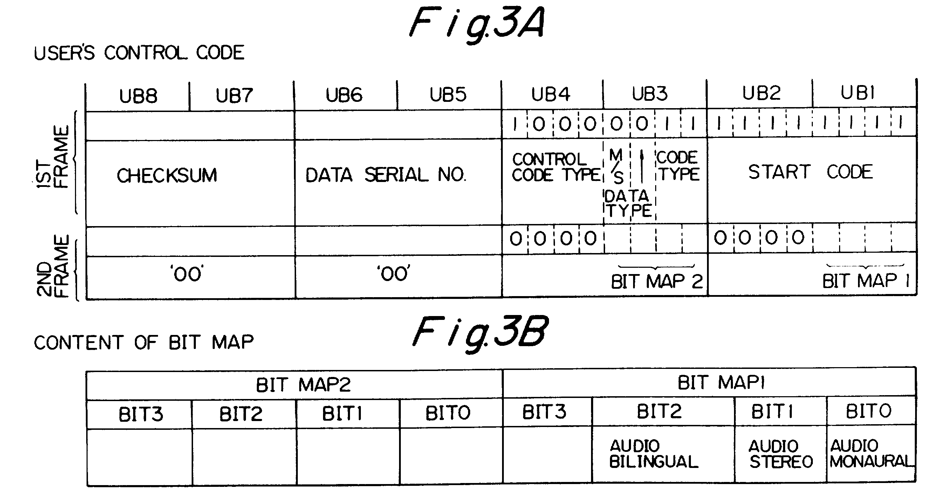

VITC area --- A user's code and a material code are recorded.
① User's code --- The user's code of ten frames is recorded in the abandoned cut area on the tape top side and in a region until the on-air start point (SOM). The user's code of 30 frames (for one second) is recorded in the area of the main body from the on-air start point (SOM). The user's code is not shown in Fig. 1.
   As shown in Fig. 3, the data format of the user's code is completed by two frames. Therefore, the user's code is recorded five times before the on-air start point (SOM) and is recorded 15 times after the on-air start point (SOM).
② Material code --- The material code is repetitively recorded three times after the user's code recorded after the on air start point (SOM).

Audio signal areas:
Channel 1 --- The signal corresponding to the recorded CM is recorded. No sound is recorded in the area corresponding to the black burst signal of the CM frame.
Channel 2 --- The signal corresponding to the recorded CM is recorded. No sound is recorded in the area corresponding to the black burst signal of the CM frame.
Channel 3 --- The signal corresponding to the recorded CM is recorded. No sound is recorded in the area corresponding to the black burst signal of the CM frame.
Channel 4 --- The signal corresponding to the recorded CM is recorded. No sound is recorded in the area corresponding to the black burst signal of the CM frame.

LTC area --- The code of the next CM frame is recorded two seconds before the on-air end point (EOM) of the CM frame. The stop code is recorded from the on-air end point (EOM). After completion of all of the CM frames, the end frame code and the end code are recorded.

Cue area --- Not particularly specified.

The data format of the user's code will now be described with reference to Fig. 3.

As shown in Fig. 3A, the data format of the user's code is constructed by two frames of the first and second frames. In the user's code, user's bits UB₁ to UB₈ each consisting of four bits of the VITC are formed.

The UB₁ and UB₂ of the first frame are set to a start code indicative of the start of data and FFH (H: hexadecimal indication) is recorded by UB₁ and UB₂.

A code type indicative of the kind of code is recorded by two bits of the first and second bits of UB₃ of the first frame.

| Bit 2 | Bit 1 | Code type |
|---|---|---|
| 0 | 0 | Tape code |
| 0 | 1 | CM frame code |
| 1 | 0 | Material code |
| 1 | 1 | Control code |

Either the essential data or the auxiliary data is indicated by the third bit of UB₃ of the first frame. The essential data denotes data which the control apparatus truly needs. The auxiliary data is additional data.

| Bit 3 | Data type |
|---|---|
| 0 | Essential data |
| 1 | Auxiliary data |

The kind (main or sub) of data in the code is indicated by the fourth bit of UB₃ of the first frame. A new kind of data is shown by combining the data kind and the code type.

| Code type | 0 (main) | 1 (sub) |
|---|---|---|
| Tape code | Tape data | Frame data |
| Frame code | Frame data | Material data |
| Material code | Material data | Inhibition of use |

Therefore, in the case of the control code, the third bit is set to the essential data and the fourth bit is set to the main data.

UB₄ of the first frame indicates the control code type and the following bit patterns are defined.

| Content | bit 7 | bit 6 | bit 5 | bit 4 |
|---|---|---|---|---|
| non-control code | 0 | 0 | 0 | 0 |
| Stop code | 0 | 0 | 0 | 1 |
| End code | 0 | 0 | 1 | 0 |
| Reserved | : | : | : | : |
| User's code | 1 | x | x | x |

If the code type is not the control code, the control code type must be set to the non-control code. The use of "1111" as data of the code type is inhibited. On the other hand, as shown in the column of the user's code, when bit 7 is set to "1", the use object of the code is opened to the user.

UB₅ and UB₆ of the first frame indicate the data serial numbers. The data serial numbers denote repetitive numbers in the case of repetitively recording a plurality of times. Numbers are sequentially added to the fundamental format blocks (from the start code to the end gap) in each code and the repetitive numbers in the data block are shown. The data serial numbers are the serial numbers of the subtraction type, and the serial number of the last block is set to "0". Such a construction is repeated each time the writing operation is executed once. The essential data and the auxiliary data are set to the independent serial numbers.

A checksum is provided for UB₇ and UB₈ of the first frame. A value such that the total of all of the bytes from the code type data to the position before the end gap is set to 0 is inserted.

Four bits of the former half (the first bit to the fourth bit) of UB₁ of the second frame are set to a bit map 1. Four bits of the latter half (the fifth bit to the eighth bit) are set to "0000". As shown in Fig. 3B, the bit map 1 is used as data of a bit unit. The data of each bit is defined such that it is ON in the case of bit "1" and it is OFF in the case of bit "0".

As an example of the use of the bit map 1, for instance, there is considered a method whereby an audio monaural mode is assigned for the first bit, an audio stereophonic mode is assigned for the second bit, and an audio bilingual mode is assigned for the third bit.

Four bits of the former half (the first bit to the fourth bit) of UB₂ of the second frame are set to a bit map 2. Four bits of the latter half (the fifth bit to the eighth bit) are set to "0000". In a manner similar to the bit map 1, the use object and use state of the bit map 2 are opened for the user. Therefore, by using the bit maps 1 and 2, an external apparatus can be controlled on a bit unit basis.

By extracting the user's bits of the bit maps 1 and 2 in parallel, the external apparatus can be more effectively controlled.

16 bits of UB₅ to UB₈ of the second frame are used as an end gap. UB₅ to UB₆ are set to "00"H. UB₇ and UB₈ are set to "00"H.

The tape code, frame code, and material code fundamentally have the same format. That is, those codes are constructed by five frames of the first to fifth frames.

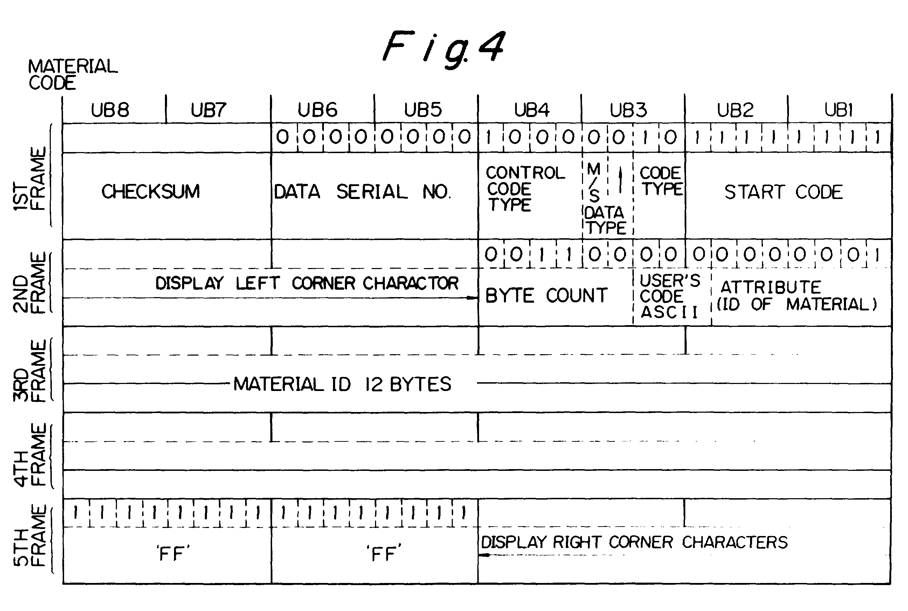

As an example, Fig. 4 shows a data format of the material code. The user's bits UB₁ to UB₂ of the first frame are set to start bits indicative of the start of data. UB₃ and UB₄ are set to data to distinguish from the user's code or the like. UB₅ and UB₆ are set to a data serial number. Bit 0 and bit 1 of UB₂ denote a code type. The tape code, frame code, material code, and control code (stop code, user's code, etc.) are distinguished by the code type. Bit 2 of UB₃ denotes a data type and is used to distinguish between the essential data and the auxiliary data. Bit 3 of UB₃ is set to a bit to distinguish between main/sub. The data serial number indicates the number which is sequentially decreased when the same data is repetitively recorded for a countermeasure for errors. For the codes of UB₃ to UB₆, a parity coding process for error detection is executed and a checksum is added as UB₇ and UB₈.

A code indicative of the attribute (title, code of the sponsor, and the like) of the material is formed as three bits of the user's bits UB₁ and UB₂ of the second frame. Two bits of UB₃ are used as 1D information to distinguish the user's code. Total six bits of the remaining two bits of UB₃ and four bits of UB₄ are used as ID information of the number of bytes of the material ID. The material ID (12 bytes) is inserted to the user's bits from the user's bit UB₅ of the second frame to all of the user's bits of the third frame, all of the user's bits of the fourth frame, and the user's bits UB₁ to UB₄ of the fifth frame. The material ID denotes the character code (for instance, ASII code, JIS code, shift JIS code, etc.) indicative of the material information. "FF"H as an end gap is inserted into UB₅ to UB₈ of the fifth frame.

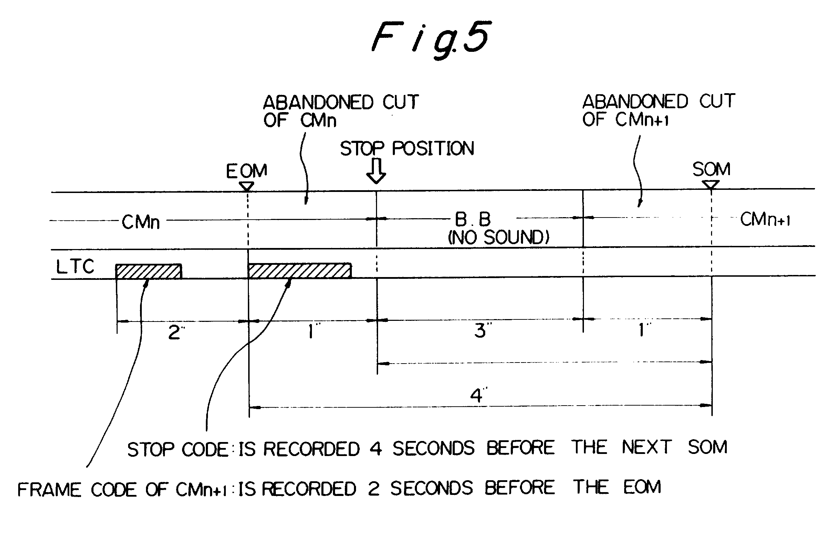

Fig. 5 shows in more detail the recording positions of a frame code and a stop code which are formed as user's bits of the time code which is recorded in the LTC area. The CM frame relates to the minimum unit of video images which are continuously reproduced. A plurality of CM frames are formed in the master tape. The material denotes a unit which is obtained by further dividing the CM frame and indicates a program or a program of a CM or the like. The frame code is constructed such that the data of the frame information (ID of the frame, title, reproducing time, and the like) regarding the CM frame is formed in user's bits of the time code LTC in the longitudinal direction.

As shown in Fig. 5, when the nth material CMₙ and the (n + 1)th material CMₙ₊₁ are continuous, the frame code of the material CMₙ₊₁ is recorded two seconds before the on-air end position EOM of the material CMₙ. On the other hand, the stop code is recorded at a position corresponding to a cue point. That is, the stop code is recorded four seconds before the broadcasting start position SOM of the next material CMₙ₊₁. The stop code is a control code to control the transmission. When the stop code is read, the reproducing operation of the VTR is stopped and is set into the standby mode to reproduce and broadcast the next CM frame.

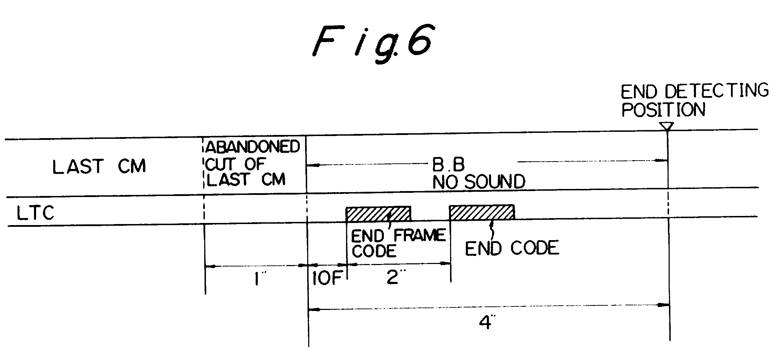

As shown in detail in Fig. 6, the end frame code and the end code are recorded at the positions where all of the CM frames of one tape are finished.

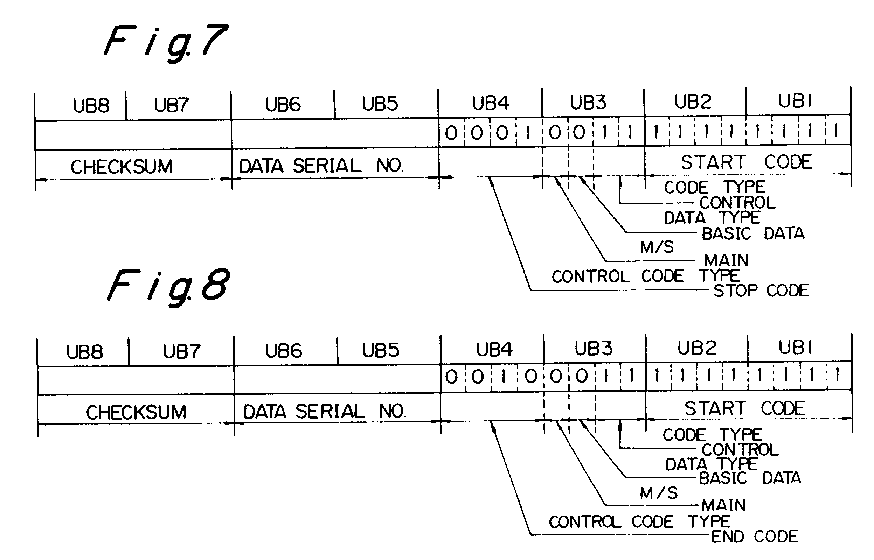

The user's code, stop code, end frame code, end code, and the like are the control codes and their formats are fundamentally identical. For instance, as shown in Fig. 7, the stop code is formed in the user's bits UB₁ to UB₈ of the LTC. UB₁ and UB₂ are set to the start code. In a manner similar to the foregoing material code, the code type, ID bit of the essential data/auxiliary data, and ID bit of the main/sub are inserted into UB₃. The control code type is inserted into UB₄. The control code type is used to identify the kind of control code. UB₅ and UB₆ are set to the data serial number. A parity coding process for error detection is executed for the codes of UB₃ to UB₆. A checksum is added as UB₇ and UB₈.

As shown in Fig. 8, the end code has a format similar to the above stop code. The control code type indicates the end code. Further, although not shown, the end frame code has the same format as the stop code and end code excluding the control code type.

The above stop code, end code, and end frame code are continuously recorded twenty times. When the end code is detected, a control signal of eight bits of the user's code is output.

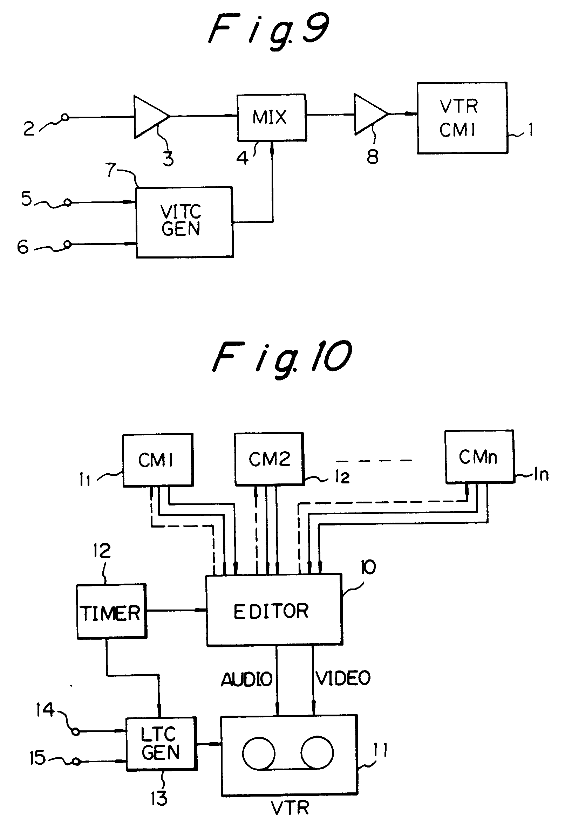

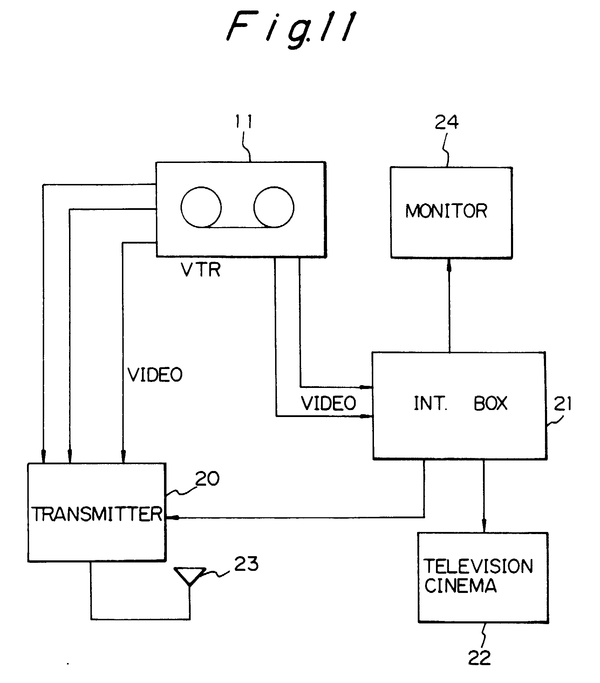

The processes to make the master tape having the tape format as mentioned above by editing the CM materials will now be described with reference to Figs. 9 and 10.

The processes to make the master tape from the CM materials can, generally, be divided into the stage to make each CM material and the stage to make the master tape by editing a plurality of CM materials. Each of the states will now be described hereinbelow.

Fig. 9 shows a block diagram of a system when CM materials are made. In Fig. 9, reference numeral 1 denotes a digital VTR.

A digital video signal and PCM audio signals which were supplied to a terminal 2 are supplied to a mixing circuit 4 through an amplifier 3. On the other hand, time addresses are supplied to a VITC generating circuit 7 through a terminal 5. User's bits which respectively form a material code and a user's code are supplied to the VITC generating circuit 7 through a terminal 6.

A VITC which is output from the VITC generating circuit 7 is added to the digital video signal and PCM audio signals by the mixing circuit 4. The resultant signals are supplied to the digital VTR 1 through an amplifier 8 and recorded to a magnetic tape. That is, the digital video signal is recorded into the video signal area of the magnetic tape. The PCM audio signals are recorded into the audio signal areas. The VITC (time code in which a user's code or a material code is formed as user's bits) is recorded in the VITC area (the 12th and 14th horizontal intervals in the vertical blanking period).

As shown in Fig. 1, in the VITC area, the above recording processes are executed in the abandoned cut area before the on-air start point (SOM). Due to this, the CM material is formed.

Fig. 10 shows a block diagram of a system when one master tape is formed by editing plurality of CM materials.

An editing apparatus 10 makes one master tape from a plurality of CM materials. A plurality of digital VTRs 1₁ , 1₂, ..., 1ₙ to reproduce a plurality of CM materials CM₁, CM₂, ... CMₙ and a digital VTR 11 to make a master tape are connected to the editing apparatus 10.

A timing signal which is supplied from a timer circuit 12 is supplied to the above-mentioned editing apparatus 10 and an LTC generating circuit 13. The timing signal controls the operations of the editing apparatus 10 and LTC generating circuit 13. A plurality of VTRs 1₁, 1₂, ..., 1ₙ are remote controlled by being supplied with control signals from the editing apparatus 10. The magnetic tape on which a plurality of CM materials CM₁, CM₂, ... CMₙ were recorded is reproduced.

The reproduced digital video signal and PCM audio signals are supplied from the editing apparatus to the digital VTR 11 at predetermined timings. On the other hand, in the LTC generating circuit 13, the time code which is supplied from a terminal 15 and user's bits which are supplied from a terminal 14 are combined and an LTC to be recorded into the LTC area is formed. The LTC is supplied to the digital VTR 11.

In the VTR 11, the digital video signal is recorded into the video signal area of the magnetic tape, the PCM audio signals are recorded into the audio signal areas, and the LTC, that is, the time addresses and the tape code, frame code, stop code, and the like which were formed in the user's bits are recorded in the LTC area. Due to this, a master tape is formed.

When the tape format which is formed as mentioned above and shown in Fig. 1 is reproduced and the CM is transmitted, the external apparatus can be controlled on the basis of the user's code. Fig. 11 shows a block diagram of a system on the side to reproduce the master tape.

The video signal and PCM audio signals of the master tape which were reproduced by the digital VTR 11 are supplied to a transmitter 20.

The video signal and LTC of the master tape which were reproduced are supplied to an interface box 21. An LTC reader to read the LTC and a VITC reader to read the VITC are provided for the interface box 21 and the time addresses, user's bits, and the like are read. The control signal which is specified by the user's bits detected is supplied to the transmitter 20, a television cinema apparatus 22, and the like as external apparatuses on the basis of the time code.

When the control signal is supplied to the transmitter 20, for instance, the audio signals are controlled to the monaural signal, stereophonic signals or the like and, thereafter, it is subjected to a predetermined signal process and the resultant signal is transmitted from an antenna 23.

A monitor video signal which is formed by superimposing the video signal reproduced from the master tape and the characters, symbols, and the like which were inserted in the frame code, material code, and the like is supplied from the interface box 21 to a monitor television 24. A monitor image is displayed.

The external apparatuses, for instance, the transmitter 20 and television cinema apparatus 22 are triggered at desired timings from the interface box 21 on the basis of the user's code, so that the control based on the user's code is executed. Therefore, the control of the external apparatuses which are concentratedly managed by a host computer hitherto is distributed and managed and the burden of the host computer can be lightened.

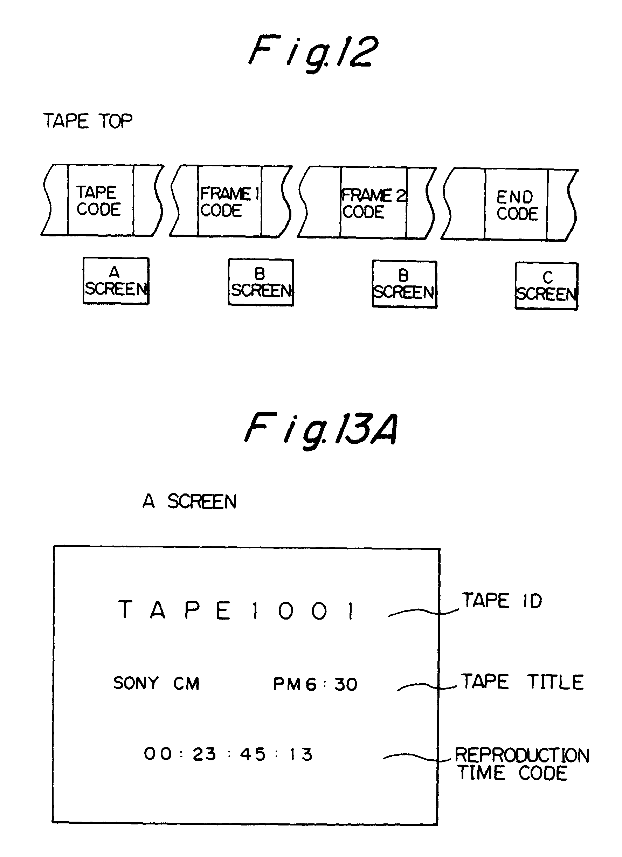

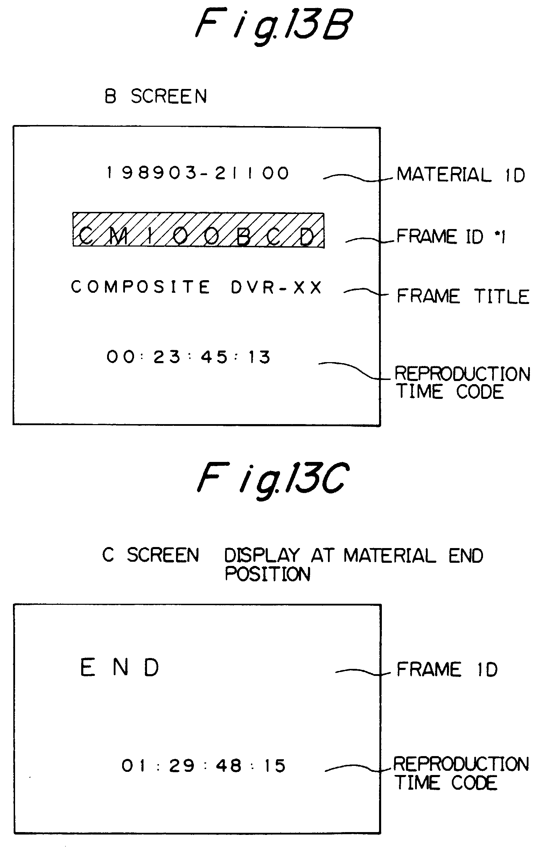

Referring now to Figs. 12 and 13, the display of the monitor television upon CM transmission will now be described. Assuming that the master tape is as shown in Fig. 12, when the tape code recorded in the LTC area of the tape top is reproduced, a picture plane corresponding to the tape code as shown in Fig. 13A is displayed by the monitor television 24.

Next, when the first CM material is transmitted, the material code of the user's bit of the VITC is read and the frame code is read. The material ID based on the material code, the frame ID and frame title based on the frame code, and the reproduction time code of the LTC are displayed by the monitor television 24 as a picture plane shown in Fig. 13B. In this case, when the transmission of the CM material is finished and the stop code is detected, the reproducing operation of the VTR is stopped. At the same time, a black mat is added to the displayed characters of the frame ID of the picture plane shown in Fig. 13B and the displayed characters are inverted. Thus, it is possible to know that the transmission of the corresponding CM material has been completed and that the VTR is set in the standby mode to transmit the next CM material.

Further, when the transmission of all of the CM frames recorded in the tape is finished and the end code is detected a picture plane shown in Fig. 13C is displayed by the monitor television 24. It is possible to know the end of transmission of the CM material of the master tape.

According to the invention, since material information is recorded in the vertical blanking period of the video signal of the CM material, the CM material and the material information always coincide. Therefore, no error occurred when CMs are exchanged and there is no need to pay any attention to the codes when CMs are exchanged.

On the other hand, according to the invention, a stop code is inserted into the time code in the longitudinal direction of the master tape and when the stop code is detected, the reproducing operation of the VTR is stopped and the ID indication is added to the screen display. Therefore, the check of the completion of transmission of a program such as a CM or the like, the check of the standby state to transmit the next CM, and the like can be easily executed.

Having described a specific preferred embodiment of the present invention with reference to the accompanying drawings, it is to be understood that the invention is not limited to that precise embodiment, and that various changes and modifications may be effected therein by one skilled in the art without departing from the scope of the invention as defined in the appended claims.

## Claims

1. A video signal recording apparatus arranged to record a video signal comprising a program and control data on a magnetic tape, the apparatus comprising:
tape code generating means (13) for generating tape code data having a user's bit area in which information data identifying the magnetic tape are formed;
recording means (11) for recording said tape code data on a longitudinal track (LTC) of said magnetic tape;
stop code generating means (13) for generating stop code data having a user's bit area in which stop control data for detection by reproducing apparatus for use in controlling the transport of said recording medium are formed; and
recording means (11) for recording said stop code data on a longitudinal track (LTC) of said recording medium,
characterised in that
the video signal comprises a plurality of programs (CMₙ), the apparatus further comprises:
material code generating means (7) for generating, for each program, material code data having a user's bit area in which information data indicative of the contents of the respective program are formed;
inserting means (4) for inserting said material code data of each program into at least one predetermined horizontal period in a vertical blanking interval of the video signal of the respective program; and
recording means (11) for recording the output signal of said inserting means (4) on a video track of said recording medium, and
said recording means (11) for recording said stop code data is arranged to record said stop control data on the longitudinal track (LTC) at a position corresponding to a cue point of said video signal a predetermined amount before the broadcasting start position of the first of said plurality of programs.

2. A video signal recording apparatus according to claim 1, wherein each of said programs is recorded as a first video signal corresponding an abandoned cut area which is not to be broadcast, a second video signal which is to be broadcast, a third video signal corresponding to an abandoned cut area which is not to be broadcast and a black burst signal formed serially in this order.

3. A video signal recording apparatus according to claim 2, wherein said information data relating to the contents of said program are inserted in the vertical blanking intervals of said second video signal.

4. A video signal recording apparatus according to claim 3, wherein said information data are inserted repeatedly.

5. A video signal recording apparatus according to any one of claims 1 to 4, wherein said material code generating means (7) further includes means for forming a user control code in said user's bit area of said first time code.

6. An information signal reproducing apparatus arranged to reproduce an information signal comprising a plurality of programs composed of video and audio signals recorded on information tracks of a recording medium including a longitudinal track (LTC) in addition to said information tracks, wherein record on said longitudinal track are tape code data having user's bit area in which information data identifying the magnetic tape are formed and stop control data for use in controlling the transport of said recording medium recorded on the longitundial track at a position corresponding to a cue point a predetermined amount before the broadcasting start position of the first of said plurality of programs, and wherein inserted in the vertical blanking intervals of the video signal of each program are material code data having a user's bit area in which information data indicative of the contents of the respective program are formed, said apparatus comprising:
reproducing means (11,21) for reproducing said video and audio signals, said information data of said tape code data and said material code data, and said stop control data recorded on said longitudinal track,
means (24) for displaying said information data reproduced by said reproducing means (21), and
stop control means (21) for controlling the transport of said recording medium in response to said stop control data reproduced by said reproducing means (11).

7. An information signal reproducing apparatus according to claim 6, further comprising control means (21) for controlling said displaying means (24) such that the displayed information data are modified in response to said stop control data.

8. A video system comprising a video signal recording apparatus according to any one of claims 1 to 5 in combination with an information signal reproducing apparatus according to claim 6 or 7.

## Patentansprüche

1. Videosignal-Aufzeichnungsgerät, welches eingerichtet ist, ein Videosignal, welches ein Programm und Steuerdaten umfaßt, auf einem Magnetband aufzuzeichnen, wobei das Gerät umfaßt:
eine Bandcode-Erzeugungseinrichtung (13) zum Erzeugen von Bandcodedaten, die einen Benutzer-Bit-Bereich haben, in welchem Informationsdaten, die das Magnetband identifizieren, gebildet sind;
eine Aufzeichnungseinrichtung (11) zum Aufzeichnen der Bandcodedaten auf einer Längsspur (LTC) des Magnetbandes;
eine Stoppcode-Erzeugungseinrichtung (13) zum Erzeugen von Stoppcodedaten, die einen Benutzer-Bit-Bereich haben, im welchem Stopp-Steuerdaten zur Ermittlung durch das Wiedergabegerät zur Verwendung beim Steuern des Transportes des Aufzeichnungsträgers gebildet sind; und
eine Aufzeichnungseinrichtung (11) zum Aufzeichnen der Stoppcodedaten auf einer Längsspur (LTC) des Aufzeichnungsträgers,
**dadurch gekennzeichnet, daß**
das Videosignal mehrere Programme (CMₙ) umfaßt, das Gerät weiter umfaßt:
eine Materialcode-Erzeugungseinrichtung (7) zum Erzeugen für jedes Programm von Materialcodedaten, die einen Benutzer-Bit-Bereich haben, in welchem Informationsdaten, die den Inhalt des jeweiligen Programms anzeigen, gebildet sind;
eine Einfügungseinrichtung (4) zum Einfügen der Materialcodedaten eines jeden Programms in zumindest eine vorgegebene Horizontalperiode in einem vertikalen Austastintervall des Videosignals des entsprechenden Programms; und
eine Aufzeichnungseinrichtung (11) zum Aufzeichnen des Ausgangssignals der Einfügungseinrichtung (4) auf einer Videospur des Aufzeichnungsträgers, und
die Aufzeichnungseinrichtung (11) zum Aufzeichnen der Stoppcodedaten eingerichtet ist, die Stopp-Steuerdaten auf der Längsspur (LTC) an einer Position, die einem Regiepunkt des Videosignals entspricht, ein vorgegebenes Maß vor der Sendestartposition des ersten der mehreren Programme aufzuzeichnen.

2. Videosignal-Aufzeichnungsgerät nach Anspruch 1, wobei jedes der Programme als ein erstes Videosignal, welches einem aufgegebenen Schnittbereich entspricht, der nicht gesendet werden soll, ein zweites Videosignal, welches gesendet werden soll, ein drittes Videosignal, welches einem aufgegebenen Schnittbereich entspricht, der nicht gesendet werden soll und ein Schwarz-Burst-Signal aufgezeichnet ist, die hintereinander in dieser Reihenfolge gebildet sind.

3. Videosignal-Aufzeichnungsgerät nach Anspruch 2, wobei die Informationsdaten, die sich auf den Inhalt des Programms beziehen, in den vertikalen Austastintervallen des zweiten Videosignals eingefügt sind.

4. Videosignal-Aufzeichnungsgerät nach Anspruch 3, wobei die Informationsdaten wiederholt eingefügt sind.

5. Videosignal-Aufzeichnungsgerät nach einem der Ansprüche 1 bis 4, wobei die Materialcode-Erzeugungseinrichtung (7) außerdem eine Einrichtung zum Bilden eines Benutzersteuercodes im Benutzer-Bit-Bereich des ersten Zeitcodes umfaßt.

6. Informationssignal-Wiedergabegerät, welches eingerichtet ist, ein Informationssignal, welches mehrere Programme umfaßt, zu reproduzieren, die aus Video- und Audiosignalen zusammengesetzt sind, die auf Informationsspuren eines Aufzeichnungsträgers aufgezeichnet sind, der eine Längsspur (LTC) zusätzlich zu den Informationsspuren umfaßt, wobei die Aufzeichnung auf der Längsspur Bandcodedaten sind, die einen Benutzer-Bit-Bereich aufweisen, in welchem Informationsdaten, die das Magnetband identifizieren, gebildet sind, und Stopp-Steuerdaten zur Verwendung beim Steuern des Transports des Aufzeichnungsträgers, die auf der Längsspur an einer Position aufgezeichnet sind, die einem Regiepunkt ein vorgegebenes Maß vor der Sendestartposition des ersten der mehreren Programme entspricht, und wobei in den vertikalen Austastintervallen des Videosignals jedes Programms Materialcodedaten eingefügt sind, die einen Benutzer-Bit-Bereich haben, in welchem Informationsdaten, die den Inhalt des jeweiligen Programms anzeigen, gebildet sind, wobei das Gerät umfaßt:
eine Wiedergabeeinrichtung (11, 21) zum Wiedergeben des Video- und Audiosignals, der Informationsdaten aus den Bandcodedaten und den Materialcodedaten, und der Stopp-Steuerdaten, die auf der Längsspur aufgezeichnet sind,
eine Einrichtung (24) zum Anzeigen der Informationsdaten, die durch die Wiedergabeeinrichtung (21) reproduziert sind, und
eine Stopp-Steuereinrichtung (21) zum Steuern des Transports des Aufzeichnungsträgers als Antwort auf die Stopp-Steuerdaten, die durch die Wiedergabeeinrichtung (11) reproduziert sind.

7. Informationssignal-Wiedergabegerät nach Anspruch 6, welches außerdem eine Steuereinrichtung (21) zum Steuern der Anzeigeeinrichtung (24) umfaßt, so daß die angezeigten Informationsdaten als Antwort auf die Stopp-Steuerdaten modifiziert werden.

8. Videosystem mit einem Videosignal-Aufzeichnungsgerät nach einem der Ansprüche 1 bis 5 in Kombination mit einem Informationssignal-Wiedergabegerät nach Anspruch 6 oder 7.

## Revendications

1. Appareil d'enregistrement de signal vidéo agencé pour enregistrer un signal vidéo comprenant un programme et des données de commande sur une bande magnétique, l'appareil comprenant :
un moyen de génération de code de bande (13) pour générer des données de code de bande comportant une zone de bits utilisateur dans laquelle des données d'information identifiant la bande magnétique sont formées ;
un moyen d'enregistrement (11) pour enregistrer lesdites données de code de bande sur une piste longitudinale (LTC) de ladite bande magnétique ;
un moyen de génération de code d'arrêt (13) pour générer des données de code d'arrêt comportant une zone de bits utilisateur dans laquelle des données de commande d'arrêt pour une détection par un appareil de reproduction en vue d'une utilisation lors de la commande du transport dudit support d'enregistrement sont formées ; et
un moyen d'enregistrement (11) pour enregistrer lesdites données de code d'arrêt sur une piste longitudinale (LTC) dudit support d'enregistrement,
caractérisé en ce que :
le signal vidéo comprend une pluralité de programmes (CMₙ),
l'appareil comprenant en outre :
un moyen de génération de code d'élément (7) pour générer, pour chaque programme, des données de code d'élément comportant une zone de bits utilisateur dans laquelle des données d'information indicatives du contenu du programme respectif sont formées ;
un moyen d'insertion (4) pour insérer lesdites données de code d'élément de chaque programme dans au moins une période horizontale prédéterminée dans un intervalle de suppression verticale du signal vidéo du programme respectif ; et
un moyen d'enregistrement (11) pour enregistrer le signal de sortie dudit moyen d'insertion (4) sur une piste vidéo dudit support d'enregistrement ; et
ledit moyen d'enregistrement (11) pour enregistrer lesdites données de code d'arrêt est agencé pour enregistrer lesdites données de commande d'arrêt sur la piste longitudinale (LTC) en une position qui correspond à un point de repérage dudit signal vidéo une valeur prédéterminée avant la position de début de diffusion du premier de ladite pluralité de programmes.

2. Appareil d'enregistrement de signal vidéo selon la revendication 1, dans lequel chacun desdits programmes est enregistré en tant que premier signal vidéo qui correspond à une zone de coupe abandonnée et qui ne doit pas être diffusé, en tant que second signal vidéo qui doit être diffusé, en tant que troisième signal vidéo qui correspond à une zone de coupe abandonnée et qui ne doit pas être diffusé et en tant que signal de salve de noir formés en série selon cet ordre.

3. Appareil d'enregistrement de signal vidéo selon la revendication 2, dans lequel lesdites données d'information se rapportant au contenu dudit programme sont insérées dans les intervalles de suppression verticale dudit second signal vidéo.

4. Appareil d'enregistrement de signal vidéo selon la revendication 3, dans lequel lesdites données d'information sont insérées de façon répétée.

5. Appareil d'enregistrement de signal vidéo selon l'une quelconque des revendications 1 à 4, dans lequel ledit moyen de génération de code d'élément (7) inclut en outre un moyen pour former un code de commande utilisateur dans ladite zone de bits utilisateur dudit premier code temporel.

6. Appareil de reproduction de signal d'information agencé pour reproduire un signal d'information comprenant une pluralité de programmes constitués par des signaux vidéo et audio enregistrés sur des pistes d'information d'un support d'enregistrement incluant une piste longitudinale (LTC) en plus desdites pistes d'information, dans lequel sont enregistrées, sur ladite piste longitudinale, des données de code de bande comportant une zone de bits utilisateur dans laquelle des données d'information qui identifient la bande magnétique sont formées et des données de commande d'arrêt pour une utilisation lors de la commande du transport dudit support d'enregistrement enregistrées sur la piste longitudinale en une position qui correspond à un point de repérage une valeur prédéterminée avant la position de début de diffusion du premier de ladite pluralité de programmes, et dans lequel sont insérées, dans les intervalles de suppression verticale du signal vidéo de chaque programme, des données de code d'élément comportant une zone de bits utilisateur dans laquelle des données d'information indicatives du contenu du programme respectif sont formées, ledit appareil comprenant :
un moyen de reproduction (11, 21) pour reproduire lesdits signaux vidéo et audio, lesdites données d'information constituées par lesdites données de code de bande et par lesdites données de code d'élément, et lesdites données de commande d'arrêt enregistrées sur ladite piste longitudinale ;
un moyen (24) pour afficher lesdites données d'information reproduites par ledit moyen de reproduction (21) ; et
un moyen de commande d'arrêt (21) pour commander le transport dudit support d'enregistrement en réponse auxdites données de commandes d'arrêt reproduites par ledit moyen de reproduction (11).

7. Appareil de reproduction de signal d'information selon la revendication 6, comprenant en outre un moyen de commande (21) pour commander ledit moyen d'affichage (24) de telle sorte que les données d'information affichées soient modifiées en réponse auxdites données de commande d'arrêt.

8. Système vidéo comprenant un appareil d'enregistrement de signal vidéo selon l'une quelconque des revendications 1 à 5 en combinaison avec un appareil de reproduction de signal d'information selon la revendication 6 ou 7.
